# EUROPÄISCHE PATENTSCHRIFT

(11) **EP 1 241 544 B1**
(45) Veröffentlichungstag und Bekanntmachung des Hinweises auf die Patenterteilung: **27.10.2004**
(21) Anmeldenummer: 02005906.9
(22) Anmeldetag: 14.03.2002
(51) Int. Cl.: G05B 19/04, G06F 9/44

(54) **Kompatibles Erweitern einer Bausteinschnittstelle**
Compatible extension of a device interface
Extension compatible d'une interface d'un module

(30) Priorität: 15.03.2001 DE 10112580
(43) Veröffentlichungstag der Anmeldung: 18.09.2002
(73) Patentinhaber: SIEMENS AKTIENGESELLSCHAFT, 80333 München (DE)
(72) Erfinder: Göddemeier, Ulrich, 76137 Karlsruhe (DE); Jany, Bernhard, 90530 Wendelstein (DE); Kulzer, Heinrich, 90475 Nürnberg (DE); Prechtl, Manfred, 92507 Nabburg (DE); Rupprecht, Georg, 90409 Nürnberg (DE); Schulz, Dietmar, 90574 Rosstal (DE)

(56) Entgegenhaltungen:
- EP-A- 0 905 938
- EP-A- 1 004 960
- KERNIGHAN ET AL.: "The C programming language" 1988 , PRENTICE HALL , ENGLEWOOD CLIFFS, NEW JERSEY, US XP002201560 * Seite 210, Zeile 1 - Seite 222, Zeile 6 *

## Beschreibung

### Technisches Gebiet

Die Erfindung betrifft ein Verfahren zum kompatiblen Erweitern einer Bausteinschnittstelle in einem Computerprogramm.

In der Automatisierungstechnik kommt es häufig vor, dass in laufenden Prozessen Programmmodifikationen erforderlich sind. Diese Modifikationen müssen jedoch auf den aktuellen Daten des eingeschwungenen Systems aufsetzen, da es sonst einen sogenannten Stoß im Prozess gäbe. Das gewünschte Verhalten bezeichnet man als stoßfreies Online-Deltaladen.

Strukturelle Änderungen in der Schnittstelle eines Bausteins führen zur Zeit im Programmiersystem, insbesondere in einem, das unter dem Markenname Step7 erhältlich ist, immer zu einer Aktualisierung des sogenannten Zeitstempels der Schnittstelle. Diese Änderung des Zeitstempels signalisiert den Applikationen, dass die Aufrufe an den Baustein ungültig sind, also neu übersetzt und die Daten, insbesondere sogenannte Instanz-DBs, neu angelegt werden müssen. Ein stoßfreies Online-Deltaladen ist somit bei Erweiterungen von Funktionsblock-Schnittstellen nicht möglich. Auch ein eventuell vorhandener Reservebereich ist hier nutzlos, da dessen anderweitige Verwendung zur Schnittstellenänderung und damit zur Zeitstempeländerung führen würde.

### Stand der Technik

Falls heute ein stoßfreies Deltaladen benötigt wird, hat der Anwender gemäß dem Stand der Technik nur folgende Wahlmöglichkeiten: Entweder nutzt er einen prophylaktisch vorgesehenen Reservebereich auch unter dem bereits reservierten Namen und Datentypen oder er sorgt für eine händische Übernahme der benötigten Aktualwerte. Für den zweiten Fall sind aber Vorkehrungen zu treffen, die dafür sorgen, dass die zu übernehmenden Werte über einen längeren Zeitraum unverändert bleiben. Dies ist aus technologischen Gründen nicht immer möglich.

Aus der Druckschrift "The C programming language", 1988, Prentice Hall, Englewood Cliffs, New Jersey, US, Seiten 210 bis 222 sind Deklarationsblöcke in Programmen bekannt, die unabhängig von der tatsächlichen Anzahl der in ihnen enthaltenen Parameter immer die gleiche Länge aufweisen. Diese Länge wird vom Betriebssystem beim Kompilieren automatisch reserviert, wobei der nicht von Parametern belegte Teil eines Feldes einen Reservebereich darstellt.

### Darstellung der Erfindung

Das der Erfindung zugrunde liegende technische Problem ist es daher, ein Verfahren zum kompatiblen Erweitern einer Bausteinschnittstelle in einem Computerprogramm anzugeben, bei dem nahezu beliebige Änderungen - insbesondere Erweiterungen - "am laufenden System" vorgenommen werden können. Hierbei sollen praktisch keine Einschränkungen bei funktionalen Möglichkeiten und keine behindernden Vorgaben zur Vorgehensweise bestehen.

Dieses technische Problem wird durch ein Verfahren mit den im Anspruch 1 angegebenen Maßnahmen gelöst.

Bei einer anderen bevorzugten Ausführungsform der Erfindung handelt es sich bei dem Baustein um einen Funktionsblock.

Bei einer weiteren bevorzugten Ausführungsform der Erfindung liegt dieser Reservebereich am Ende eines jeden Deklarationsblocks, bei dem Erweiterungen der Schnittstelle erwartet werden.

Gemäß der Erfindung wird der neue Parameter am Ende der alten Parameter eingefügt und der nachfolgende Reservebereich entsprechend gekürzt, so dass die Länge eines jeden Deklarationsblocks gleich bleibt. Damit ist garantiert, dass bestehende Aufrufe nicht neu übersetzt werden müssen, da die sogenannten Offsets zu den "alten" Parametern gleich geblieben sind und auch keine neuen Daten bzw. Instanz-DBs angelegt werden müssen, da die "neuen" Parameter noch Platz haben.

Applikationen, die diese Technik nutzen wollen, müssen die Default-Werte der neuen Parameter in die bestehenden Daten bzw. Instanz-DBs eintragen, bevor der Funktionsblock geladen wird.

Gemäß einer bevorzugten Ausführungsform der Erfindung steht der übrig bleibende Reservebereich am Ende des Deklarationsblocks.

### Kurze Beschreibung der Zeichnungen

Im Folgenden ist zur weiteren Erläuterung und zum besseren Verständnis eine bevorzugte Ausführungsform der Erfindung unter Bezugnahme auf die beigefügten Zeichnungen näher erläutert.
- Fig. 1: zeigt einen Funktionsblock;
- Fig. 2: zeigt das Einfügen eines neuen Parameters am Ende der alten Parameter.

### Beschreibung einer bevorzugten Ausführungsform

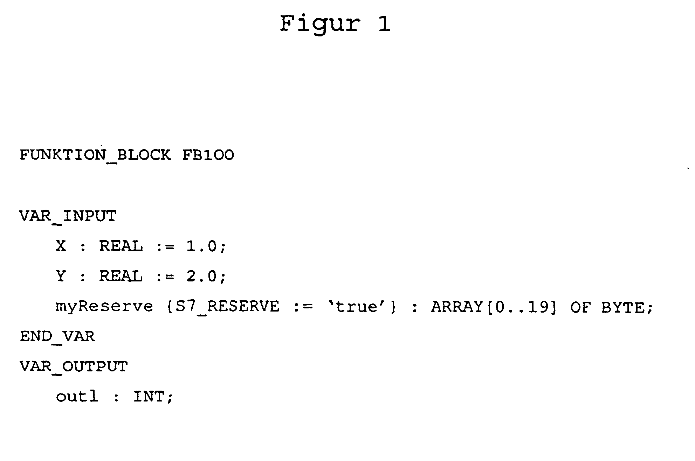

Fig. 1 zeigt einen Funktionsblock, bestehend aus den Parametern x und y und einem Reservebereich (S7_Reserve). Diesem Funktionsblock soll ein weiterer Eingangsparameter z hinzugefügt werden.

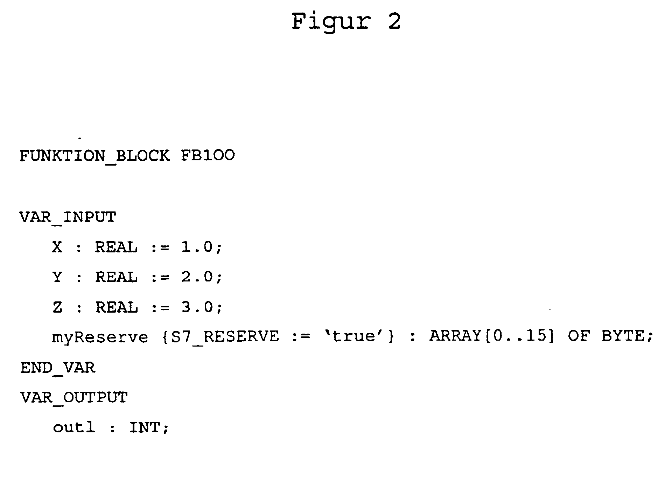

Fig. 2 zeigt den selben Funktionsblock, nachdem der Parameter z eingefügt wurde. Hierbei gilt, dass die Länge der neuen Parameter (hier z) plus der Länge des neuen Reservebereichs (hier 0 bis 15) gleich der Länge des alten Reservebereichs aus Fig. 1 (hier 0 bis 19) ist. Des Weiteren ist es hier notwendig, dass der neue Reservebereich (wie auch vorher der alte Reservebereich) am Ende des Funktionsblockes steht.

Im Standardfall führt obige Programmänderung zu einer Schnittstellenänderung. Wird aber die spezielle Übersetzungsoption "Schnittstellenzeitstempel beibehalten" angewählt, wird diese Schnittstellenänderung verhindert, da diese Option dem Compiler signalisiert, die üblichen Prüfungen nur auf die alten Deklarationsbereiche anzuwenden, also auf die Parameter, die bei der letzten Übersetzung nicht das Attribut S7_Reserve getragen haben.

## Patentansprüche

1. Verfahren zum kompatiblen Erweitern einer Schnittstelle eines mehrere Parameter aufweisenden Bausteins in einem Computerprogramm, wobei im Baustein ein Reservebereich vorgesehen ist, der bei Erweiterungen der Schnittstelle entsprechend gekürzt wird, so dass die Länge eines jeden Deklarationsblocks gleich bleibt, wobei einem Compiler durch Anwahl einer speziellen Übersetzungsfunktion "Schnittstellenzeitstempel beibehalten" signalisiert wird, übliche Prüfungen nur auf Parameter anzuwenden, die bei der letzten Übersetzung nicht dem Reservebereich angehörten.

2. Verfahren nach Anspruch 1, **dadurch gekennzeichnet, dass** es sich bei dem Baustein um einen Funktionsblock (FB) handelt.

3. Verfahren nach Anspruch 1 oder 2, **dadurch gekennzeichnet, dass** der Reservebereich am Ende eines jeden Deklarationsblocks liegt.

4. Verfahren nach einem der Ansprüche 1 bis 3, **dadurch gekennzeichnet, dass** ein neuer Parameter am Ende der alten Parameter eingefügt wird und der nachfolgende Reservebereich entsprechend gekürzt wird, so dass die Länge eines jeden Deklarationsblocks gleich bleibt.

5. Verfahren nach einem der Ansprüche 1 bis 4, **dadurch gekennzeichnet, dass** der übrig bleibende Reservebereich am Ende des Deklarationsblocks steht.

## Claims

1. Method for the compatible extension of an interface of a device with several parameters in a computer program, whereby there is a reserve area provided in the device, said area being shortened accordingly, in the event of extensions of the interface, so that the length of each respective declaration block remains the same, whereby it is signalled to a compiler by the selection of a special translation function, "Keep interface date stamp", to use usual checks only on parameters that did not belong to the reserve area at the last translation.

2. Method according to Claim 1, **characterised in that** the device is a function block (FB).

3. Method according to Claim 1 or 2, **characterised in that** the reserve area is at the end of each declaration block.

4. Method according to one of the Claims 1 to 3, **characterised in that** a new parameter is inserted at the end of the old parameter and the reserve area following after is shortened accordingly, so that the length of each declaration block remains the same.

5. Method according to one of the Claims 1 to 4, **characterised in that** the reserve area that remains is at the end of the declaration block.

## Revendications

1. Procédé pour étendre de manière compatible une interface d'un module comportant plusieurs paramètres dans un programme d'ordinateur, une zone de réserve étant prévue dans le module qui, lors d'extensions de l'interface, est raccourcie de manière correspondante, si bien que la longueur de chacun des blocs de déclaration reste la même, dans lequel on signale à un compilateur par sélection d'une fonction de traduction spéciale "conserver horodateur d'interface" que des vérifications usuelles ne sont à appliquer qu'à des paramètres qui ne faisaient pas partie de la zone de réserve lors de la dernière traduction.

2. Procédé suivant la revendication 1, **caractérisé en ce que** le module est un bloc (FB) fonctionnel.

3. Procédé suivant la revendication 1 ou 2, **caractérisé en ce que** la zone de réserve se trouve à la fin de chacun des blocs de déclaration.

4. Procédé suivant l'une des revendications 1 à 3, **caractérisé en ce que** l'on insère un nouveau paramètre à la fin des anciens paramètres et on raccourcit en conséquence la zone de réserve suivante, si bien que la longueur de chacun des blocs de déclaration reste la même.

5. Procédé suivant l'une des revendications 1 à 4, **caractérisé en ce que** la zone de réserve restante se trouve à la fin du bloc de déclaration.
